# EUROPEAN PATENT APPLICATION

(11) **EP 4 836 221 A1**
(43) Date of publication of application: **04.11.2026**
(21) Application number: 25173927.2
(22) Date of filing: 02.05.2025
(51) Int. Cl.: H02J 3/01, H02J 3/18, H02J 3/38, H02M 1/12

(54) **METHOD AND ARRANGEMENT FOR HARMONIC COMPENSATION**

(71) Applicant: ABB SCHWEIZ AG, 5400 Baden (CH)
(72) Inventor: Kukkola, Jarno, 00380 Helsinki (FI); Väisälä, Tomi, 00380 Helsinki (FI); Routimo, Mikko, 00380 Helsinki (FI)
(74) Representative: Kolster Oy Ab

(57) **Abstract**

A method and arrangement for harmonic compensation in an electric system, the electric system comprising an AC network, at least one load entity (10) comprising at least a first electric power converter (11, 12) connected to the AC network, and a harmonic compensation entity (20) connected to the AC network and, the method comprising estimating at least one harmonic current component caused by the at least one load entity (10) in the AC network on the basis of at least data indicative of an operating point of the at least one load entity (10), and performing at least partial harmonic compensation in the AC network by the harmonic compensation entity (20) on the basis of the estimated at least one harmonic current component caused by the at least one load entity (10).

## Description

### TECHNICAL FIELD

The present invention relates to a method and arrangement for harmonic compensation in an electric system.

### BACKGROUND OF THE INVENTION

As an example, electric drives, such as motor drives, may have uncontrolled AC-to-DC diode rectifiers (or line-commutated thyristor rectifiers) that can cause low-order current harmonics to flow in an AC grid where they are connected to. Due to the non-zero impedances of the AC system, such current harmonics can further cause AC voltage harmonics and distortion, possibly leading to several consequences such as additional heating in the cables and transformers and resonances, for example. A typical rectifier in an electric drive is a three-phase, full-bridge diode (or thyristor) rectifier that draws current in 6 pulses from the AC grid, and it may be referred as a 6-pulse rectifier. This type of rectifier may result in characteristic current harmonic components at 5th, 7th, 11th, 13th, ... harmonic frequencies, for instance. Alternatively, an electric drive can be equipped with a different multi-pulse rectifier (such as a 12- or 18-pulse rectifier) that may have a different but still recognizable characteristic harmonic spectrum.

Instead of using an uncontrolled (or line-commutated) rectifier, an electric drive can have a pulse-width-modulated (PWM), active-front-end (AFE) rectifier for AC-to-DC conversion to greatly reduce magnitudes of the low-order harmonic current components flowing to the AC grid. Moreover, with the AFE rectifier, the grid (input) current of the drive can be almost sinusoidal. However, a typical AFE rectifier may produce more power losses in the electric drive and increase cost and size of the drive in comparison with a drive having a 6-pulse diode rectifier, for example. Moreover, an active rectifier is usually more expensive than an uncontrolled rectifier.

One possible way to reduce harmonic current distortion due to a diode rectifier of an electric drive is to install a passive harmonic filter, i.e., inductors and capacitors, in parallel with the drive rectifier. Inductors and capacitors of the filter can be selected such that they provide a low-impedance path for selected current harmonic components, and thus, reduce corresponding current components flowing to the AC grid, for instance. In addition to simplicity, this can be a cost-effective solution in some cases. However, passive filters may be bulky, and they cannot easily adapt to changing grid or loading conditions, for example. They may also contribute to system-level electrical resonances, for instance.

As an alternative to such a filter made of passive components, various active harmonic filters are available. Typically, they may have a PWM bridge (like in AFE rectifiers) and additional passive filtering components for high-frequency PWM ripple, for example. Active harmonic filters can be more flexible since they can adapt to different loading and network conditions and provide several functionalities such as harmonic cancellation, unbalance compensation and reactive power compensation, for instance. Disadvantages of the active filters may include cost, at least in simple systems, and additional current measuring equipment, such as current transducers, that may need to be installed in the AC system to enable the operation of the active filter. In particular, the installation of such current transducers or corresponding equipment may not be straightforward due to cabling and/or an existing AC system installation lacking suitable space for extra current transducers resulting in high installation costs, for example.

### BRIEF DESCRIPTION

An object of the present invention is thus to provide a method and an apparatus for implementing the method so as to overcome the above problems or at least to alleviate the problems. The objects of the invention are achieved by a method and an arrangement which are characterized by what is stated in the independent claims. The preferred embodiments of the invention are disclosed in the dependent claims.

The invention is based on the idea of estimating at least one harmonic current component caused by at least one load entity in an AC network on the basis of at least data indicative of an operating point of the at least one load entity and performing at least partial harmonic compensation in the AC network by harmonic compensation entity on the basis of the estimated at least one harmonic current component caused by the at least one load entity.

An advantage of the solution of the invention is that the harmonic compensation can be implemented without the need to install additional current measuring equipment.

### BRIEF DESCRIPTION OF THE DRAWINGS

In the following the invention will be described in greater detail by means of preferred embodiments with reference to the accompanying drawings, in which
Figure 1 shows an example of an electric system according to an embodiment;
Figure 2 shows an example of an electric system according to an embodiment;
Figure 3 shows an example of an electric system according to an embodiment;
Figure 4 shows an example of an electric system according to an embodiment;
Figure 5 shows a diagram illustrating representation of a harmonic component according to an embodiment;
Figure 6 shows a diagram illustrating harmonic component estimator according to an embodiment;
Figure 7 shows a diagram illustrating models for harmonic components according to embodiments;
Figure 8 shows a diagram illustrating parallel harmonic component estimators according to an embodiment;
Figure 9 shows a load entity according to an embodiment;
Figure 10 shows a block diagram according to an embodiment;
Figure 11 shows a flow diagram according to an embodiment;
Figure 12 shows a flow diagram according to an embodiment;
Figure 13 shows a flow diagram according to an embodiment;
Figure 14 shows a flow diagram according to an embodiment;
Figure 15 shows a flow diagram according to an embodiment;
Figure 16 shows an example of a harmonic compensation entity according to an embodiment;
Figure 17 shows a diagram according to an embodiment;
Figure 18 shows a diagram illustrating examples of magnitudes and phases of harmonic components according to embodiments;
Figure 19 shows a diagram illustrating examples of currents of a rectifier according to embodiments;
Figure 20 shows a diagram illustrating examples of magnitudes of harmonic components according to embodiments;
Figure 21 shows a diagram illustrating examples of current THD according to embodiments;
Figure 22 shows a diagram illustrating examples of currents of a rectifier according to embodiments; and
Figure 23 shows a block diagram according to an embodiment.

### DETAILED DESCRIPTION

The following embodiments are exemplary. Embodiments described herein may be implemented in various manners other than the ones described below. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. When a particular feature, structure, or characteristic is described in connection with an embodiment, it is submitted that it is within the knowledge of one skilled in the art to affect such feature, structure, or characteristic in connection with other embodiments whether or not explicitly described.

Furthermore, terms such as "comprises", "comprising", "has", "having", "includes" and/or "including" should be understood as not limiting the described embodiment(s) to consist of only those features, elements, components and/or combinations thereof that have been mentioned, and such embodiment(s) may also contain features, elements, components and/or combinations thereof that have not been specifically mentioned. Moreover, terms such as "connected" and "coupled", are used to mean connected or coupled directly or indirectly (i.e. via one or more elements).

Reference numbers, in the description and/or in the claims, serve to illustrate the embodiments with reference to the drawings, without limiting the embodiments to these examples only. Generally, all terms and expressions used should be interpreted broadly and they are intended to illustrate, not to restrict, the embodiments. The figures only show components necessary for understanding the various embodiments. The number, shape and/or configuration of the various elements, and generally their implementation, could vary from the examples shown in the figures.

Moreover, it should be understood that although terms such as "first," "second" and the like may be used herein to describe various elements, these elements should not be limited by these terms. Such terms are only used to distinguish one element from another. For example, a first element could be termed a second element, and similarly, a second element could be termed a first element, without departing from the scope of example embodiments. As used herein, expression "and/or" includes any and all combinations of one or more of the listed terms.

The application of the embodiments described herein is not, unless otherwise stated, restricted to any specific system, but they may be applied in various electric power systems such as electric power converter systems. In addition, the use of the embodiments described herein is not restricted to any system utilizing a specific basic frequency or to any specific voltage level, for example.

According to an embodiment, a method for harmonic compensation in an electric system is provided, wherein the electric system comprises an AC network, at least one load entity comprising at least a first electric power converter connected to the AC network, and a harmonic compensation entity connected to the AC network. According to an embodiment, the method comprises estimating at least one harmonic current component caused by the at least one load entity in the AC network on the basis of at least data indicative of an operating point of the at least one load entity, and performing at least partial harmonic compensation in the AC network by the harmonic compensation entity on the basis of the estimated at least one harmonic current component caused by the at least one load entity. According to an embodiment, the at least one harmonic current component to be estimated and/or compensated may be suitably selected, e.g. preselected or predetermined, e.g. according to system characteristics and/or requirements. The at least one harmonic current component may comprise one or more odd harmonic current components and/or one or more even harmonic current components, for example.

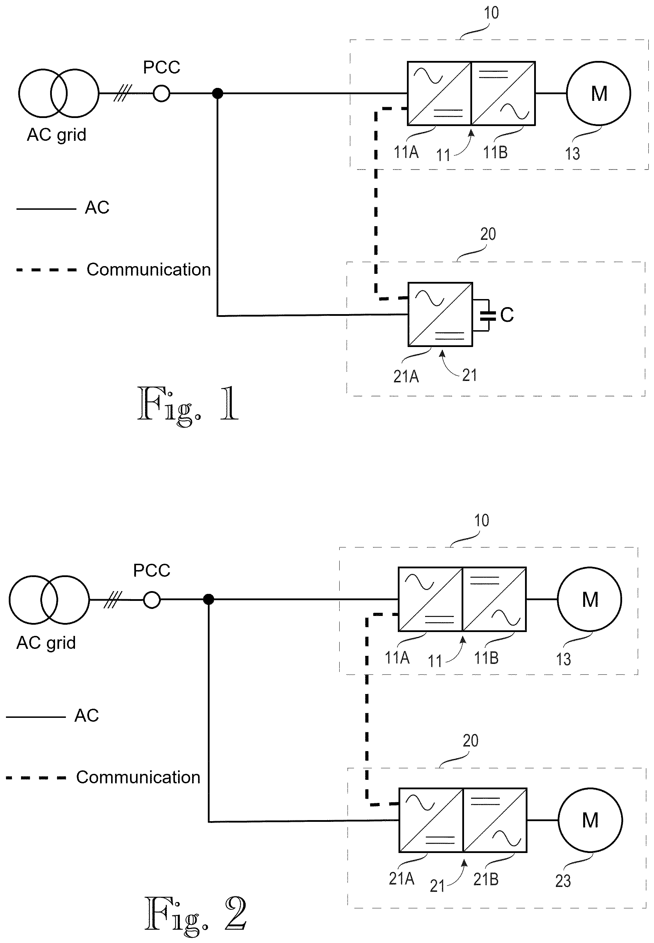

Figures 1, 2, 3 and 4 show some possible examples of an electric system according to embodiments.

The example of Figure 1 comprises an AC (alternating current) network, i.e. an AC grid, which may be a single-phase or a multi-phase, such as a three-phase, network, for example. The AC network may be a public electrical grid or another kind of AC network configured to supply power to one or more loads. The example of Figure 1 further shows one load entity 10. Such a load entity 10 may generally be or comprise any kind of load (unit, device, apparatus, system or a combination thereof) which comprises at least an (first) electric power converter 11 connected to the AC network, in the example to a point of common coupling PCC thereof. The load entity 10 may generally be or represent a non-linear load, i.e. it may have a non-linear characteristic at least occasionally and/or periodically. Thus, the load entity 10 may cause one or more harmonic current components in the AC network and consequently harmonic distortion the level of which may vary over time, for example. Terms electric power converter and electric power converter unit herein generally refer to any kind of device, apparatus, circuitry or generally configuration capable of (configured to) performing electric power conversion. An electric power converter may comprise one or more electric power converter units (modules). Such one or more electric power converter units may be physical or logical units, for example. Generally, such an electric power converter unit may be implemented by means of controllable and/or non-controllable semiconductor(s), which may be configured e.g. as one or more semiconductor bridges. In case of controllable semiconductor(s), they may be controlled by a suitable control method or scheme, such as pulse-width modulation (PWM), for example. A non-limiting list of examples of electric power converters and/or electric power converter units includes e.g. an AC-to-DC converter, such as a controllable or non-controllable rectifier, a DC-to-AC converter, such as an inverter, an AC-to-AC converter and a DC-to-DC converter as well as any combinations of two or more of such converters and/or converter units. As an example, a combination of a rectifier and an inverter forms a frequency converter. Generally, such an electric power converter and/or electric power converter unit may be unidirectional, i.e. capable of transferring electric power only in a single direction. Such an electric power converter and/or electric power converter unit may alternatively be bidirectional, i.e. capable of transferring electric power in two opposite directions, thus enabling a bidirectional flow of power between two sources, for example. In the example of Figure 1 the example electric power converter 11 comprises two electric power converter units 11A, 11B. The first electric power converter unit 11A is configured to operate at least as a rectifier and the second electric power converter unit 11B is configured to operate at least as an inverter. The two electric power converter units 11A, 11B of the electric power converter 11 may be connected by a DC link (not shown separately) in a manner known *per se.* Such a DC link (intermediate circuit) may comprise a capacitance (capacitive circuit), which may comprise one or more capacitors, for example. Alternatively, or additionally, such a DC link may comprise an inductance (inductive circuit), which may comprise one or more inductors, for example. However, the (first) electric power converter 11 of the load entity 10 connected to the AC network could comprise e.g. only (or at least) the electric power converter unit 11A configured to operate at least as a rectifier or another kind of converter unit, for example. In the example of Figure 1 the load entity 10 further comprises an electric motor 13 which represents a load for the electric power converter 11 of the load entity 10. Thus, as an example, the load entity 10 could comprise an electric drive, such as a motor drive. However, instead of a motor 13, or generally an electric machine, the electric power converter 11 of the load entity 10 could be supplying one or more other kinds of loads. The example of Figure 1 further shows a harmonic compensation entity 20 connected to the AC network, in the example also to the point of common coupling PCC thereof. The harmonic compensation entity 20 may generally be or comprise any kind of unit, device, apparatus, system or a combination thereof, for example, which is/are capable of (configured to) compensating, at least partially, one or more harmonic current components in the AC network. According to an embodiment, the harmonic compensation entity 20 may comprise an (second) electric power converter 21 connected to the AC network as also illustrated in the example of Figure 1. In the example of Figure 1, the electric power converter 21 comprises (at least) one electric power converter unit 21A, which may be configured to operate in a bidirectional manner, i.e. both as a rectifier and as an inverter thus enabling a flow of power in both directions through the electric power converter unit 21A. Moreover, in the example the harmonic compensation entity 20 further comprises a capacitance C (or generally an energy storage), which may comprise one or more capacitors, connected to the electric power converter 21. Alternatively, or additionally, such an energy storage could comprise an inductance, which may comprise one or more inductors. Such combination of the electric power converter 21 and the capacitance C may thus constitute a so-called active filter capable of (configured to) providing harmonic compensation to the AC network. The example of Figure 1 further shows a communication connection between the load entity 10 and the harmonic compensation entity 20. Such a communication connection may be generally implemented in a wired and/or wireless manner using one or more suitable communication protocols, for example. The connections shown in Figure 1 are logical connections and corresponding actual physical connections could be different. The at least one load entity 10 and the harmonic compensation entity 20 may be (e.g. physically) different (independent) entities, i.e. entities different from each other. However, such different entities may be nevertheless connected e.g. via one or more communication connections and/or via one or more power connections.

Figure 2 shows another example which otherwise corresponds to the example of Figure 1 but in the example of Figure 2 the harmonic compensation entity 20 comprises an (second) electric power converter 21, which in the example comprises two electric power converter units 21A, 21B. The two electric power converter units 21A, 21B of the electric power converter 21 may be connected by a DC link (not shown separately). The first electric power converter unit 21A may be configured to operate in a bidirectional manner, i.e. both as a rectifier and as an inverter thus enabling a flow of power in both directions through the electric power converter unit 21A, e.g. at least between the AC network and the DC link of the electric power converter 21. Moreover, also the second electric power converter unit 21B may be configured to operate in a bidirectional manner, i.e. both as an inverter and as a rectifier thus enabling a flow of power in both directions through the electric power converter unit 21B. Alternatively, the first and second electric power converter units 21A, 21B could be configured to operate in a unidirectional manner. In such a case the first electric power converter unit 21A may be configured to be capable of controlling its input current shape. An example of such a unidirectional converter capable of controlling its input current shape is the so-called Vienna rectifier. Thus, the electric power converter 21 may operate as a frequency converter. Moreover, the harmonic compensation entity 20 in the example comprises a load 23, in this example an electric motor M, that the electric power converter 21 may supply. Instead of a motor 23, or generally an electric machine, the electric power converter 21 of the harmonic compensation entity 20 could be supplying one or more other kinds of loads. In this example, the electric power converter 21 is also capable of (configured to) providing harmonic compensation to the AC network.

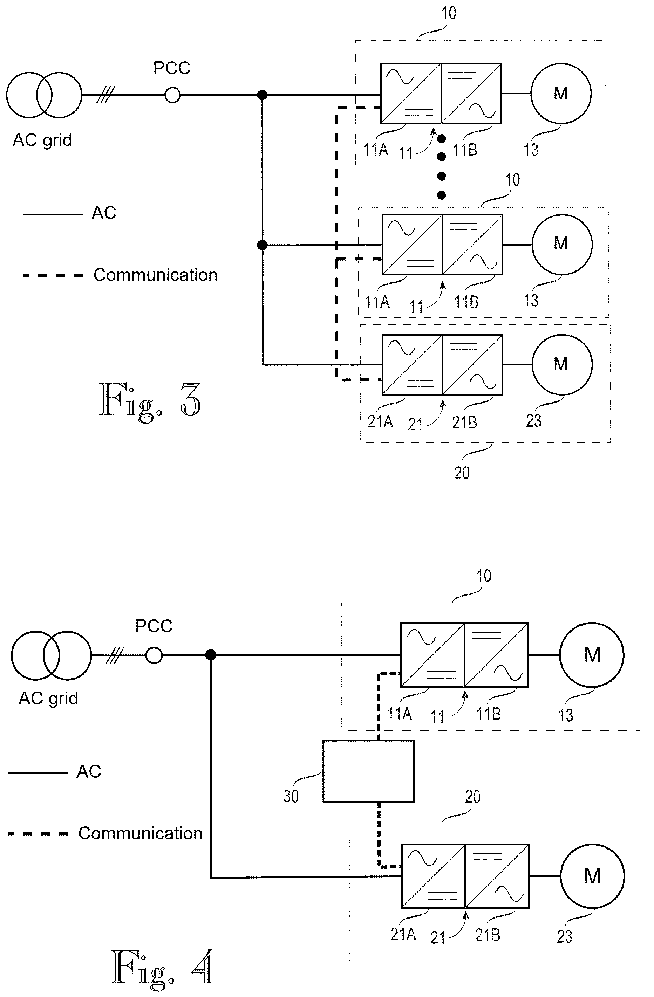

Figure 3 shows another example which otherwise corresponds to the example of Figure 2 but in the example of Figure 3 there are two (or more) parallel load entities 10 connected to the AC network. In this case all the load entities 10 may have a communication connection to the harmonic compensation entity 20 as illustrated. Figure 4 shows yet another example which otherwise corresponds to the example of Figure 2 but in the example of Figure 4 there is an additional entity 30, or a control entity, capable of implementing e.g. one or more control related functions of the various embodiments described herein. The. According to an embodiment, the control entity 30 is different (independent) from the at least one load entity 10 and different from the harmonic compensation entity 20. In other words, the control entity 30 may be an entity (e.g. physically) different from both the at least one load entity 10 and from the harmonic compensation entity 20. However, while different entities, the control entity 30 may be connected at least via one or more communication connections to the one or more load entities 10 and/or to the harmonic compensation entity 20 enabling communication of data as also illustrated in the example of Figure 4. Such a control entity 30 could be or comprise any suitable control device such as a computing device, a gateway device, industrial PC, a computer/server in a network and/or cloud, programmable logic controller (PLC), micro controller, and/or a mini/single-board computer that may be able to communicate directly or indirectly via e.g. gateway(s) with the one or more load entities 10 and the harmonic compensation entity 20.

E.g. to avoid a requirement of an additional AC current sensor(s) for implementing harmonic filtering or compensation, an essentially open-loop harmonic compensation solution can be provided according to the various embodiments described herein. The solution according to the various embodiments described herein may be implemented in a grid-current-sensorless manner. According to embodiments, harmonic current estimation may be performed and communication of data enabling the estimation and/or of estimation results between the at least one load entity 10, the harmonic compensation entity 20 and/or the control entity 30 may be performed.

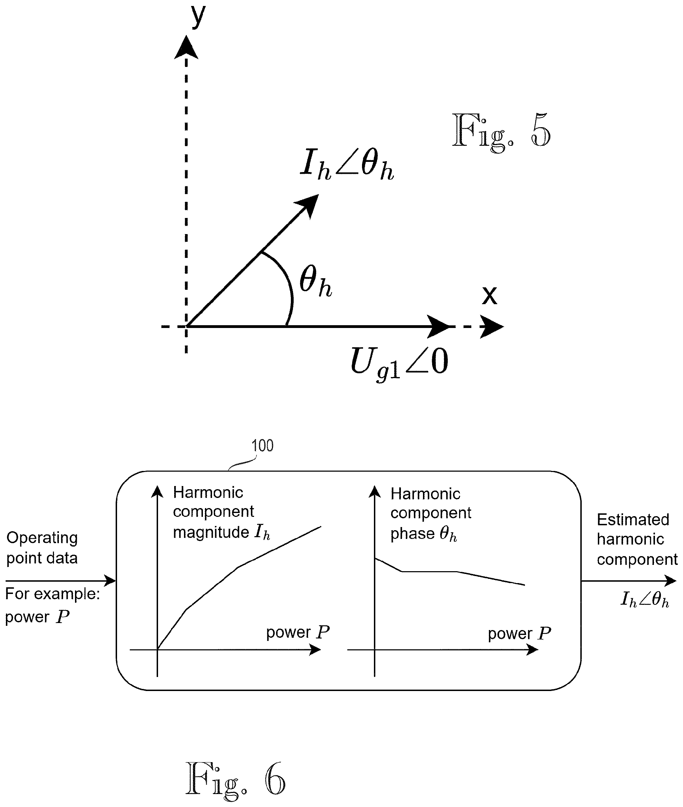

Generally, a harmonic current component at harmonic angular frequency of *ωₕ* = *h* * *w*₁, where *h* is the harmonic order (such as *h =* 5 or *h* = 7) and w₁ is the fundamental angular frequency (such as *w*₁ = 2 π · 50 Hz or *w*₁ = 2 π · 60 Hz), can be characterized by its magnitude *Iₕ* and phase θₕ as *Iₕ*∠*θₕ*. The phase *θₕ* may be relative to a zero phase *θ*₀ = 0 that is to be defined. The zero phase can, for example, be selected to equal the phase *θ*_{*g*1} of the fundamental-frequency (i.e. the first harmonic) grid-voltage component (*U*_{*g*1}∠*θ*_{*g*1} *= U*_{*g*1} ∠0) at the PCC as shown in Figure 5. Then, the phase of the harmonic current component is relative to a phase of the fundamental-frequency voltage component and can be communicated e.g. from one entity to another entity in a global and shared coordinate system. The harmonic component can be seen or expressed as a phasor, or essentially equivalently as a complex number, and there are also alternative ways to polar form to present it, such as a two-dimensional vector ***Iₕ,*** or as real and imaginary parts *I_{h,x}* and *I_{h,y}* (or x and y components in a cartesian coordinate system illustrated in the example of Figure 5). Moreover, for such alternative forms of notation it holds ${I}_{h} ∠ {θ}_{h} = {I}_{h , x} + {jI}_{h , y} = Re \left\{{I}_{h}∠{θ}_{h}\right\} + j ⋅ Im \left\{{I}_{h}∠{θ}_{h}\right\}$ (1) where *j* is the imaginary unit and *I_{h,x}* and *I_{h,y},* are the real and imaginary parts of the harmonic component, respectively, that can further be presented as vector ***Iₕ** =* [*I_{h,x}, I_{h,y}*]*.* Hence, as an alternative to magnitude and phase, the harmonic component can be essentially equivalently characterized by its real and imaginary part or using complex number or vector combining these, for instance. However, it is noted that it is not relevant which particular form of notation is used. According to an embodiment, the at least one harmonic current component may be defined by a magnitude of the harmonic current component and a phase of the harmonic current component or in any equivalent way as described above, for example.

All three phases (e.g., a, b, and c-phases) in the three-phase (three-wire) system have generally their own harmonic current components at the harmonic frequency of *ωₕ = h* * *w*₁ as *I_{a,h}*∠*θ_{a,h}, I_{b,h}*∠*θ_{b,h},* and *I_{c,h}*∠*θ_{c,h},* where subscripts a, b, c denote the three phases. It is possible to combine these per-phase harmonic components to one vector-valued harmonic component ***iₕ*** to describe all three phases simultaneously, e.g., using space vectors. It is also possible to reduce complexity by assuming equal magnitudes and typical phase shift of 120 degrees for the per-phase harmonic components, for example. In this case information can be packed into a single complex-valued number (phasor) *Iₙ*∠*θₕ* per one harmonic component, and the per-phase harmonic components may be obtained from that by phase shifting, for example.

The estimating of the at least one harmonic current component caused by the at least one load entity 10 in the AC network on the basis of at least data indicative of an operating point of the at least one load entity 10 can be arranged in various ways. According to an embodiment, an operating point of the at least one load entity 10 could be determined by a loading state of the first electric power converter 11 within the load entity 10, for example.

According to an embodiment, the data indicative of the operating point of the at least one load entity 10 may comprise one or more of the following: an operating power of the first electric power converter 11, a DC link voltage of the first electric power converter 11 and/or a DC link current of the first electric power converter 11. The operating power of the first electric power converter 11 alone might be used for indicating the operating point of the at least one load entity 10, for example. The data indicative of the operating point of the at least one load entity 10 may alternatively or additionally comprise one or more quantities, or combination(s) of quantities, indicative of and/or in a known relationship to the operating power of the first electric power converter 11 and/or the DC link voltage of the first electric power converter 11 and/or the DC link current of the first electric power converter 11, for example. Some examples of such quantities include e.g. current, voltage and energy. Term operating power of the first electric power converter 11 herein may generally refer to any power quantity indicating a power that the first electric power converter 11 draws from the AC network and/or power that flows through the first electric power converter 11 from the AC network to the load that the from the AC network is supplying, for example. Such power quantity could be or expressed as an AC power or a DC power, for example. Moreover, e.g. any energy quantity corresponding to such power quantity could be used instead of the power quantity. According to an embodiment, the (operating) power quantity is an active (operating) power quantity. As an example, the operating power of the first electric power converter 11 could be determined directly from one or more quantities of the first electric power converter 11 itself or from one or more quantities of components thereof, such as the first electric power converter unit 11A and/or the second electric power converter unit 11B. As another example, the operating power of the first electric power converter 11 could be determined at least partly indirectly from one or more quantities of the load 13, for instance. Such one or more quantities of the load 13 could, e.g. in case the load 13 comprises an electric machine, include an estimated or measured torque of the electric machine and/or an estimated or measured (rotational) speed of the electric machine and/or any similar quantity of the load 13. Generally, any such quantity or quantities of the load 13, which are in any known relationship to the operating power of the first electric power converter 11, for example, could be used for determining the operating power of the first electric power converter 11. Additionally or alternatively, the data indicative of the operating point of the at least one load entity 10 could comprise one or more such quantities of the load 13, for instance. Moreover, the power quantity and/or the DC link voltage quantity and/or the DC link current quantity could be an instantaneous value, a filtered value or a time average over a selected period of time (e.g. 10 ms, 20 ms, 100 ms, 200 ms, 1 s, ...), for example. The power quantity can be determined by using currents and voltages measured within the first electric power converter 11, e.g. within the first electric power converter unit 11A and/or within the second power converter unit 11B thereof.

According to an embodiment, the estimating of the at least one harmonic current component caused by the at least one load entity 10 may be performed additionally on the basis of characteristic data of the AC network. According to an embodiment, such characteristic data of the AC network may comprise e.g. one or more of the following: a voltage of the AC network, an impedance of the AC network, a short circuit current of the AC network and/or a short circuit power of the AC network. The voltage of the AC network may be indicated by a voltage of one phase or by voltages of two or more phases of the AC network, for example. The voltage(s) could be or based on an instantaneous or root mean square (RMS) value(s), for example. Moreover, such value(s) could be a filtered value(s) or a time average value(s) of sample values over a selected period of time (e.g. 10 ms, 20 ms, 100 ms, 200 ms, 1 s, ...), for example. The characteristic data of the AC network may alternatively or additionally comprise one or more quantities, or combination(s) of quantities, indicative of the voltage of the AC network, the impedance of the AC network, the short circuit current of the AC network and/or the short circuit power of the AC network.

According to an embodiment, the estimating of the at least one harmonic current component caused by the at least one load entity 10 may be performed essentially continuously or periodically at predetermined intervals, for example. As an example, the estimation could be performed with a (predetermined) time interval of 1 ms to 10 s, such as 1 ms, 10 ms, 100 ms, ... 1 s, or any suitable system-specific time interval. Additionally or alternatively, the estimating of the at least one harmonic current component caused by the at least one load entity 10 may be performed in response to one or more predetermined condition(s) being fulfilled and/or in response to a query or command received. According to an embodiment, the estimating of the at least one harmonic current component caused by the at least one load entity 10 may be performed by using a predetermined static model or by simulation of a model of the load entity 10. Some possible examples are disclosed below.

In a simple form, an estimator for performing the estimation can be based on a static pre-calculated, pre-measured, or otherwise pre-defined harmonic current model that can take at least operating point data of the at least one load entity 10 as an input and give one or more estimated harmonic component(s) as an output. Figure 6 illustrates an example of this type of simple estimator 100 where the operating point data comprises an active power P flowing to the load 13, e.g., to the motor, connected to the electric power converter 11 of the load entity 10 and the *h*^{th} harmonic current component (magnitude *Iₕ* and phase *θₕ* thereof) is modeled as a function of the power, e.g. as *Iₕ*∠θ*ₕ = f*(*P*)*.* In the following, the harmonic component is presented in its polar form (using the magnitude and the phase) for simplicity, but the embodiments described herein are also applicable for the alternative equivalent presentation forms of the harmonic component described earlier.

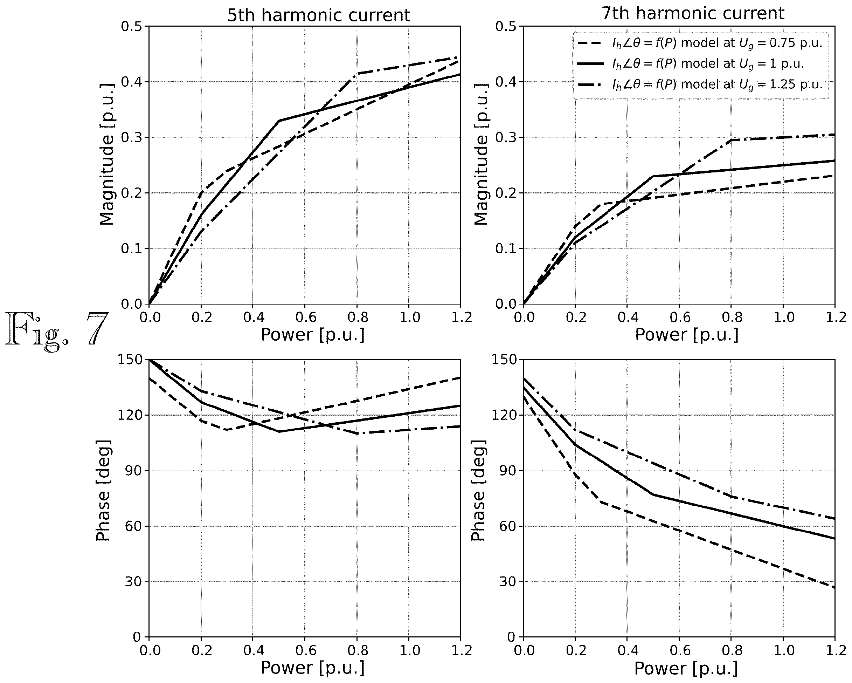

To give an example (cf. Figure 7), the function *Iₙ*∠*θₕ = f*(*P*) used in harmonics estimation can be piece-wise linear as ${I}_{h} \left(P\right) = \left\{\begin{matrix}\frac{{I}_{h , c 1} - {I}_{0}}{{P}_{c 1}} P + {I}_{0} , P \leq {P}_{c 1} \\ \frac{\left(P-{P}_{c 1}\right) \left({I}_{h , c 2}-{I}_{h , c 1}\right)}{{P}_{c 2} - {P}_{c 1}} + {I}_{h , c 1} , {P}_{c 1} < P \leq {P}_{c 2} \\ \frac{\left(P-{P}_{c 2}\right) \left({I}_{h , n}-{I}_{h , c 2}\right)}{{P}_{n} - {P}_{c 2}} + {I}_{h , c 2} , P > {P}_{c 2}\end{matrix}\right.$ (2) ${θ}_{h} \left(P\right) = \left\{\begin{matrix}\frac{{θ}_{h , c 1} - {θ}_{0}}{{P}_{c 1}} P + {θ}_{0} , P \leq {P}_{c 1} \\ \frac{\left(P-{P}_{c 1}\right) \left({θ}_{h , c 2}-{θ}_{h , c 1}\right)}{{P}_{c 2} - {P}_{c 1}} + {θ}_{h , c 1} , {P}_{c 1} < P \leq {P}_{c 2} \\ \frac{\left(P-{P}_{c 2}\right) \left({θ}_{h , n}-{θ}_{h , c 2}\right)}{{P}_{n} - {P}_{c 2}} + {θ}_{h , c 2} , P > {P}_{c 2}\end{matrix}\right.$ (3) where *I*_{*n,c*1} and *I*_{*h,c*2} are the harmonic current magnitudes and *θ*_{*h,c*1} and *θ*_{*h,c*2} are the harmonic current phases at the change-over points c1 and c2, respectively, *P*_{*c*1} and *P*_{*c*2} are the active powers at these change-over points, *I_{h,n}* is the harmonic current magnitude and *θ_{h,n}* is the harmonic current phase at a third power point, such as a nominal power point *Pₙ*, and *I*₀ and *θ*₀ are the magnitude and phase at zero power. These example piece-wise linear functions (2) and (3) have three parts, but the functions could alternatively be comprised of one, two, three, or more parts, for example. In this type of functions, the parameters of the functions (e.g. the active powers, and harmonic magnitudes and phases at the change-over points, zero point, and nominal point) are to be pre-defined (e.g. using measured, calculated and/or simulated data of the load entity 10 or a portion thereof). Then, during the operation the estimator may be simply inputting the active (operating) power to the functions and outputting the selected harmonic component(s) magnitude and angle based on the function(s). An alternative to the piece-wise linear function that could be used in the estimator is a polynomial function or combination of piece-wise linear and polynomial functions, for example. Generally, any real function capable of describing harmonic current characteristics as a function of power could be applied.

Instead of an analytical function (e.g. linear, piecewise linear, polynomial or combination of these), the harmonic estimation could be implemented numerically using e.g. lookup table(s), array(s) and/or other suitable data structure(s), for example. The (predetermined) harmonic current magnitude *Iₕ* and phase *θₕ* of order h at different active powers P can be stored to a lookup table(s) and/or array(s). The estimator 100 can then get the output value *Iₕ*∠*θₕ* from the lookup tables or arrays through array indexing operations, where the indexing corresponds to the operating-point data as the input of the function (e.g. power P). Since the lookup table or array gives outputs for only discrete input values (indices or keys), between the discrete input values (indices or keys) linear interpolation could, for example, be used and/or the output value corresponding to the nearest discrete input value could be selected, for example.

As described above, the estimating of the at least one harmonic current component caused by the at least one load entity 10 could be performed additionally on the basis of characteristic data of the AC network. Examples of such characteristic data of the AC network may comprise e.g. one or more of the following: a voltage of the AC network (i.e. grid voltage), an impedance of the AC network (i.e. grid impedance), a short circuit current of the AC network and/or a short circuit power of the AC network. As an example, to augment single-input single-output model structure, the input data can generally comprise more than one relevant signal to the harmonic component estimation. Then, the harmonic component under estimation can generally be expressed as *Iₙ*∠*θₕ = f*(*u*₁, *u*₂, ... *uₙ*), where *u*_{1,} *u*₂, ... *uₙ* are the inputs of the model. An example case of two inputs in the model and estimator is first explained below.

Figure 7 shows representative examples for modeling e.g. 5^{th} and 7^{th} harmonic current components *(h =* 5 and *h* = 7) as a function of the active power P at different grid voltage *U_{g}* levels. It should be noted, however, that the 5^{th} and 7^{th} harmonic current components have been selected in the example merely as an example and that any one or more harmonic current components (h = 2, 3, 4, 5, ...) could be selected (e.g. preselected) for this purpose depending on e.g. system characteristics. Furthermore, in the examples, the different exemplary predefined grid voltage *U_{g}* levels (*U*₁ = 0.75 p.u., *U*₂ = 1 p.u., and *U*₃ = 1.25 p.u.) results in three different sets of functions *Iₕ*∠θ*ₕ = f*₁(*P*), *Iₕ*∠*θₕ = f*₂(*P*), and *Iₕ*∠*θₕ = f*₃(*P*). Let us generalize this example such that there are M predefined grid-voltage levels *Uₓ* (x = 1, 2, 3, ...M) and their corresponding harmonic-model functions *fₓ*(*P*) (x = 1, 2, 3, ...M). In the case of an actual grid voltage *U_{g}* matching the one of the predefined grid voltage levels *Uₓ,* the function-based estimator *Iₕ*∠*θₕ = f*(*P,U_{q}*) reduces to the case *Iₕ*∠*θₕ = fₓ*(*P*), where *fₓ* models the harmonics at the *Uₓ = U_{g}.* Otherwise, the function-based estimator *Iₕ*∠θ*ₕ = f*(*P,U_{g}*) could use e.g. the two closest predefined voltage levels *Uₓ* (x = 1, 2, 3, ...M) and *U_{y}* (y = 1, 2, 3, ...M) and the corresponding models *Iₕ*∠*θₕ = fₓ*(*P*) and *Iₙ*∠*θₕ = f_{y}*(*P*) to interpolate (or extrapolate) the harmonic current estimate from the outputs of the models *fₓ*(*P*) and *f_{y}*(*P*)*.* An alternative to the interpolation could be to use the nearest voltage level and its predefined model in the estimation, for example.

Above, the case of having input data comprising two input signals in the harmonic estimation was reduced to single-input case by using a set of single-input functions *Iₕ*∠θ*ₕ = f*(*P*)*.* This is not needed if e.g. an analytical function can model harmonics directly *Iₕ*∠θ*ₕ = f*(*P,U_{g}*) for the estimation. Alternatively, a numerical approach with two-dimensional lookup tables, arrays or other suitable data structures could be used similarly as explained already above.

In the case of a non-linear load being e.g. an electric drive equipped with a 6-pulse (or multi-pulse) diode rectifier, the grid voltage *U_{g}* could be replaced with the DC-link voltage *U_{dc}* in the estimation and functions above since it is known that the average DC-link voltage and grid-voltage are closely related to each other in rectifiers. For example, the average DC-link voltage of a 6-pulse rectifier is *U_{dc} =* $3 \sqrt{2} {U}_{g} / π$, when U_{g} is a root-mean-square (RMS) value of the line-to-line voltage. Hence, the model-based estimation could then be written as *Iₕ*∠*θₕ = f*(*P,U_{dc}*) and it can be formulated and implemented similarly as in the case of *Iₙ*∠*θₕ = f*(*P,U_{q}*) described above. The advantage of using *U_{dc}* is that it is typically measured or estimated inside the electric drive, or more specifically within the electric power converter 11 therein. Other variants for the inputs could be formulated e.g. by writing the active power as a product of a voltage and current such as *P = U_{dc}I_{dc},* where *I_{dc}* is the current flowing through the DC link. In other words, essentially the same harmonic estimation goal could be achieved with *Iₕ*∠θ*ₕ = f*(*P,U_{gc}*) and *Iₕ*∠θ*ₕ = f*(*I_{dc}, U_{dc}*), for example.

Furthermore, it is possible to increase the estimation accuracy by increasing the number of inputs or parameters in the static model and estimator. One parameter that could benefit the estimator to give more accurate results is the AC grid impedance *Z_{g}* (or short-circuit current *Iₖ* / power *Sₖ*) seen e.g. from the point of common coupling PCC. An estimator inputting these as a parameter could be of form *Iₕ*∠θ*ₕ* = *f*(*P,Z_{g}*), *Iₕ*∠*θₕ = f(P, Iₖ*), *Iₕ*∠*θₕ = f*(*P,Sₖ*), *Iₕ*∠*θₕ = f*(*P,U_{dc}, Z_{g}*), *Iₕ*∠*θₕ = f*(*P,U_{g}, Z_{g}*), *Iₕ*∠*θₕ = f*(*P,U_{dc}, Iₖ*), *Iₕ*∠*θₕ = f*(*P,U_{g}, Iₖ*), *Iₕ*∠θ*ₕ = f*(*P,U_{dc}, Sₖ*), or *Iₕ*∠*θₕ = f*(*P,U_{g}, Sₖ*), for example. Naturally, the power equation P *= U_{dc}I_{dc}* could be used to create more input-signal alternatives. The grid impedance (or short-circuit current/power) or any similar parameter could be predetermined and hence could be given to the estimator e.g., during the commissioning of the system and/or estimated/measured/updated during the operation. Moreover, in the above models, instead of AC grid impedance *Z_{g}*, an input describing conductivity or grid strength could also be or comprise a reactance, resistance, admittance, conductance and/or susceptance or any other suitable quantity for this purpose, for example.

An additional input that could further improve the estimation result is the grid voltage and/or its harmonic(s). A selection of grid-voltage harmonic(s), possibly including the fundamental-frequency component, could be included in the model inputs *u*₁, *u*₂, ... *uₙ* in addition to the previously described inputs or as an alternative to one or more of the previously described inputs.

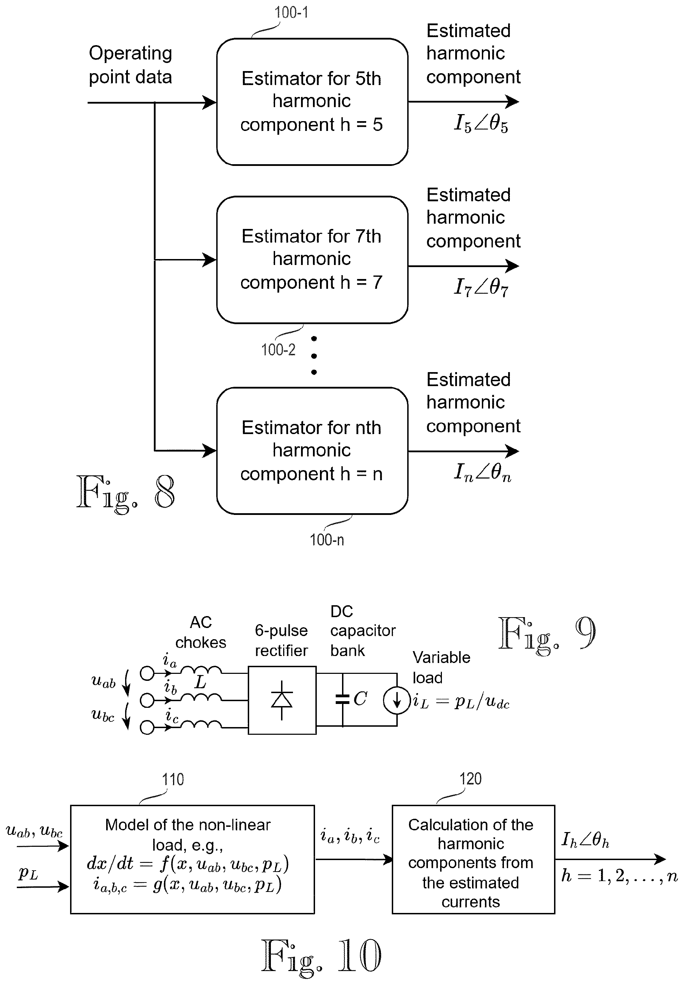

In the embodiments and examples described above, an estimation of a single harmonic component was discussed. According to an embodiment, the same approach could be extended for multiple (two or more) harmonic current components. In case multiple harmonic components are estimated, the estimators can, for example, be implemented in parallel as shown in the example of Figure 8 which shows parallel estimators 100-1, 100-2 ... 100-n. It is worth noticing that the harmonic component estimation is also in this case not limited to 5^{th} and 7^{th} (h = 5, and h= 7) harmonic components given merely as examples, since the same approach can be used for any harmonic component (h = 2, 3, 4, 5, ...) caused by the load entity 10.

According to an embodiment, alternatively or additionally, the estimation, and the estimator, can be based on simulation, such as real-time simulation, of a system model of the load entity 10, or at least a portion thereof, and calculation of the harmonic components from the real-time simulated grid currents. Figure 9 depicts an example where the load entity 10 is a 6-pulse rectifier system including AC chokes, a DC capacitor bank and a variable load (current through the variable load *i_{L}=p_{L}*/*u_{dc}*) supplied by the rectifier, is modeled first using an equivalent electrical circuit. Phase-to-phase input voltages of the system are *u_{ab}, u_{bc}.* As shown in the example of Figure 10, this kind of circuit model may then be written e.g. as a non-linear system of differential/difference equations (or it could be written in computer code, for instance), and finally the system of differential equations (or computer code) can be solved stepwise to obtain, in block 110, estimated grid currents *iₐ, i_{b}, i_{c}* of the load entity 10. From the estimated grid currents, the estimated harmonic components can then be calculated, in block 120, e.g., using Fourier transform or digital filtering or some other suitable method. It is noted that circuit topologies of e.g. rectifiers and/or other power converters and components thereof or connected thereto that could be modelled and simulated are not limited to the example shown in Figures 9 and 10. As an example, in the example rectifier system of Figure 9, there could be DC chokes instead of (or in addition to) the AC chokes and/or the 6-pulse rectifier could be a multi-pulse rectifier bridge, such as 12-pulse, 18-pulse or 24-pulse diode rectifier, or another kind of rectifier, such as a thyristor rectifier.

The estimating of the at least one harmonic current component caused by the at least one load entity 10 may be performed in the load entity 10 itself or it may be performed in the harmonic compensation entity 20, for example. Moreover, it is also possible that the estimating of the at least one harmonic current component caused by the at least one load entity 10 is performed in the control entity 30 as exemplified in Figure 4. Depending on which entity the estimation is performed in, communication of data enabling the estimation and/or of estimation results between the at least one load entity 10, the harmonic compensation entity 20 and/or the control entity 30 may then be suitably performed. Some possible alternatives and examples are disclosed below without limiting the implementation only to these examples.

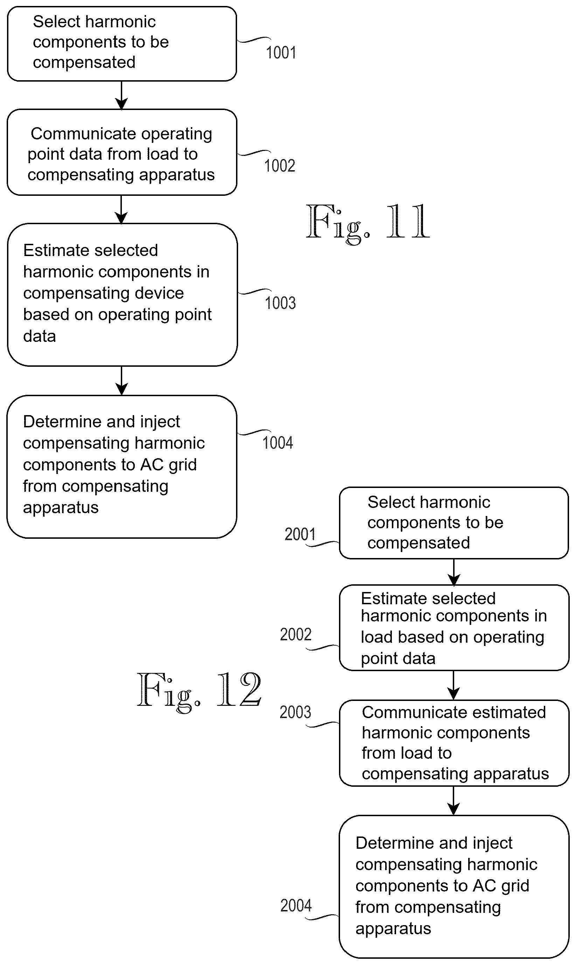

According to an embodiment, the estimating of the at least one harmonic current component caused by the at least one load entity 10 may be performed in the harmonic compensation entity 20, wherein the method comprises communicating the data indicative of the operating point of the at least one load entity 10 from the at least one load entity 10 to the harmonic compensation entity 20. Consequently, as shown in Figure 11, one or more harmonic components to be compensated is/are selected 1001. The selection 1001 may be performed beforehand, i.e. the selected one or more harmonic component to be compensated may be predetermined. Alternatively, the selection 1001 may be (re)performed e.g. each time, or less frequently, when the estimation is performed. It is also possible that selection 1001 is performed in response to one or more predetermined condition(s) being fulfilled and/or in response to a query or command received. The data indicative of the operating point of the at least one load entity 10 is communicated 1002 from the at least one load entity 10 to the harmonic compensation entity 20 and the at least one harmonic current component caused by the at least one load entity 10 is/are estimated 1003 in the harmonic compensation entity 20 on the basis of at least the communicated data indicative of the operating point of the load entity 10. Compensating harmonic components can then be determined and injected 1004 to the AC grid from the compensating apparatus to obtain at least partial harmonic compensation in the AC network. Thus, in the examples shown in e.g. Figures 1 and 2, the load entity 10 (such as an electric drive equipped with the diode rectifier 11) may communicate its operating point data, adequate for harmonic estimation, to the harmonic compensation entity 20 (such as an electric drive equipped with the controllable rectifier 21) and the harmonic compensation entity 20 may estimate the selected harmonic current component(s) of (caused by) the load entity 10 based on the communicated operating point data. The harmonic compensation entity 20 may then determine compensating harmonic current component(s) based on the estimated harmonic current component(s) and inject the compensating current component(s) to the AC grid to achieve partial harmonic current cancellation at the PCC.

According to another embodiment, the estimating of the at least one harmonic current component caused by the at least one load entity 10 is performed in the same at least one load entity 10, wherein the method comprises communicating the estimated at least one harmonic current component from the at least one load entity 10 to the harmonic compensation entity 20. Consequently, as shown in Figure 12, one or more harmonic components to be compensated is/are selected 2001 e.g. similarly to step 1001 described above. The at least one harmonic current component caused by the at least one load entity 10 is/are estimated 2002 in the load entity 10 in question based on at least the data indicative of the operating point of the load entity 10 in question. The one or more estimated harmonic components is/are communicated 2003 from the load entity 10 to the harmonic compensation entity 20 and compensating harmonic components can then be determined and injected 2004 to the AC grid from the compensating apparatus to obtain at least partial harmonic compensation in the AC network. Thus, in the examples shown in e.g. Figures 1 and 2, the load entity 10 (such as an electric drive equipped with the diode rectifier 11) may estimate its harmonic current component(s) based on the operating point data and communicate the estimated harmonic current component(s) to the harmonic compensation entity 20 (such as an electric drive equipped with the controllable rectifier 21). The harmonic compensation entity 20 may then determine compensating harmonic current component(s) based on the estimated harmonic current component(s) and inject the compensating current component(s) to the AC grid to achieve partial harmonic current cancellation at the PCC.

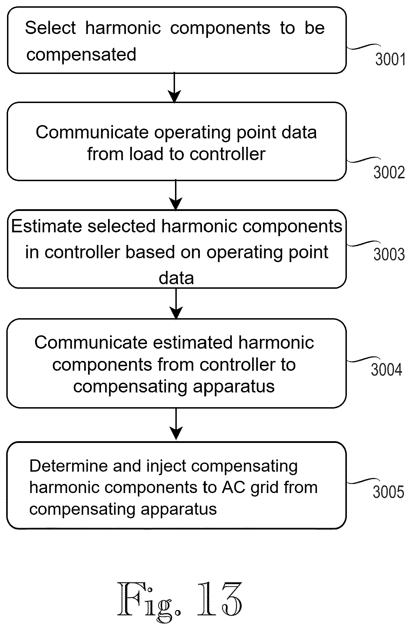

According to another embodiment, the estimating of the at least one harmonic current component caused by the at least one load entity 10 is performed in a control entity 30 different from the at least one load entity 10 and different from the harmonic compensation entity 20, wherein the method comprises communicating the data indicative of the operating point of the at least one load entity 10 from the at least one load entity 10 to the control entity 30 and communicating the estimated at least one harmonic current component from the control entity 30 to the harmonic compensation entity 20. Consequently, as shown in Figure 13, one or more harmonic components to be compensated is/are selected 3001 e.g. similarly to step 1001 described above. The data indicative of the operating point of the at least one load entity 10 is communicated 3002 from the at least one load entity 10 to the control entity 30 and the at least one harmonic current component caused by the at least one load entity 10 is/are estimated 3003 in the control entity 30 on the basis of at least the communicated data indicative of the operating point of the load entity 10. The one or more estimated harmonic components is/are communicated 3004 from the control entity 30 to the harmonic compensation entity 20 and compensating harmonic components can then be determined and injected 3005 to the AC grid from the compensating apparatus to obtain at least partial harmonic compensation in the AC network.

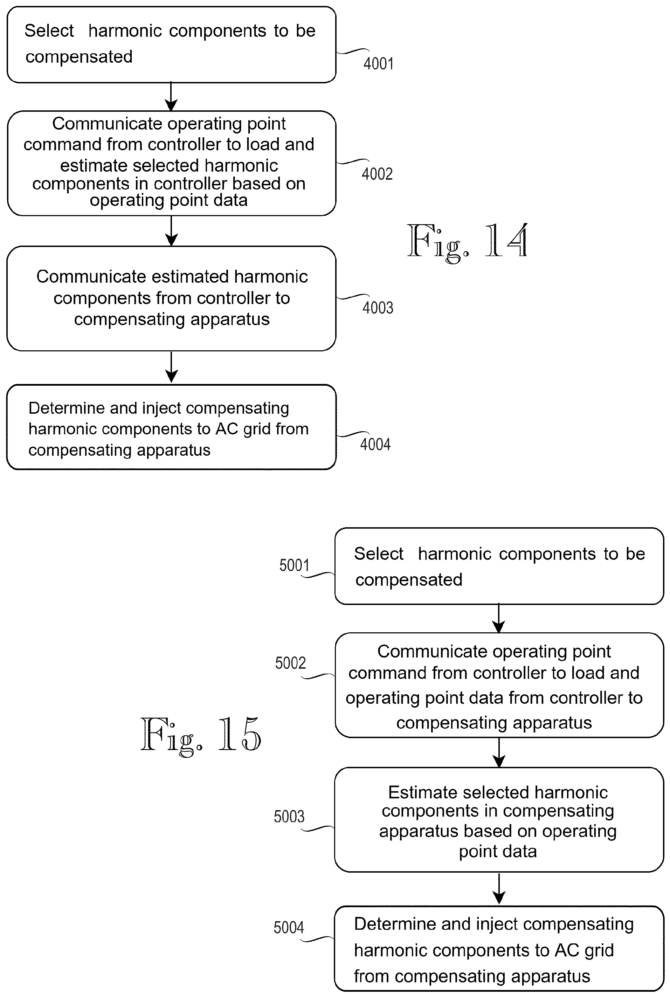

According to another embodiment, the estimating of the at least one harmonic current component caused by the at least one load entity 10 is performed in a control entity 30 different from the at least one load entity 10 and different from the harmonic compensation entity 20, wherein the method comprises communicating an operating point command from the control entity 30 to the at least one load entity 10 and communicating the estimated at least one harmonic current component from the control entity 30 to the harmonic compensation entity 20. Consequently, as shown in Figure 14, one or more harmonic components to be compensated is/are selected 4001 e.g. similarly to step 1001 described above. An operating point command is communicated 4002 from the control entity 30 to the at least one load entity 10 to set the operating point of the load entity 10 to the operating point of the command. Moreover, the at least one harmonic current component caused by the at least one load entity 10 is/are estimated 4002 in the control entity 30 on the basis of at least the data indicative of the operating point of the load entity 10 which corresponds to the operating point of the operating point command. The one or more estimated harmonic components is/are communicated 4003 from the control entity 30 to the harmonic compensation entity 20 and compensating harmonic components can then be determined and injected 4004 to the AC grid from the compensating apparatus to obtain at least partial harmonic compensation in the AC network.

According to another embodiment, the estimating of the at least one harmonic current component caused by the at least one load entity 10 is performed in the harmonic compensation entity 20, wherein the method comprises communicating an operating point command from a control entity 30 different from the at least one load entity 10 and different from the harmonic compensation entity 20 to the at least one load entity 10 and communicating the data indicative of the operating point of the at least one load entity 10 from the control entity 30 to the harmonic compensation entity 20. Consequently, as shown in Figure 15, one or more harmonic components to be compensated is/are selected 5001 e.g. similarly to step 1001 described above. An operating point command is communicated 5002 from the control entity 30 to the at least one load entity 10 to set the operating point of the load entity 10 to the operating point of the command and the data indicative of the operating point of the at least one load entity 10, which corresponds to the operating point of the operating point command, is communicated 5002 from the control entity 30 to the harmonic compensation entity 20. The at least one harmonic current component caused by the at least one load entity 10 is/are then estimated 5003 in the harmonic compensation entity 20 on the basis of at least the communicated data indicative of the operating point of the load entity 10. Compensating harmonic components can then be determined and injected 5004 to the AC grid from the compensating apparatus to obtain at least partial harmonic compensation in the AC network.

In the embodiments involving the additional control entity 30, also such control entity 30 could further use additional input data for the estimation, such as measured or estimated grid voltage, as described above. Moreover, e.g. in electric drive systems, the electric drives may get operating point commands (references) from an external control entity, such as a PLC, via a communication bus as depicted in Figure 4. Thus, as described in the embodiments above, it is possible that the operating point data needed for harmonic estimation could be derived from such operating point command (reference) commanded by the external control entity 30. In this case, the control entity 30 knows its commands and could also formulate the operating point data for the estimation task carried out by itself or by the harmonic compensation entity 20, or directly calculate the harmonic current references needed for compensation. The external control entity 30 could further communicate the information needed for the harmonic compensation entity 20. Then, depending on the information communicated, the harmonic compensation entity 20 could either only perform the compensation task (estimated harmonics or harmonic current references communicated) or in addition to compensation task also perform the estimation task from the received operating point data, for example.

According to an embodiment, there could be two (or more) such control entities 30, which could be different entities, i.e. different from each other, such that one control entity gives operating point command (reference) and another control entity is configured to estimate harmonics based on received operating point data or operating point command (reference), for example.

The estimation and/or communication and/or any other functionalities according to the various embodiments described herein can be implemented e.g. by means of suitable software or firmware in a controller(s) (unit, arrangement, system) of the respective entity performing the functionality. For example, the load entity 10 and/or the harmonic compensation entity 20 comprising at least one electric power converter may comprise a controller of or for the electric power converter which can be configured to perform the estimation and/or communication functionalities, such as receiving and/or sending the data (information) to be communicated, according to the various embodiments described herein. As an example, the electric power converter 11 of the load entity 10, or the first electric power converter unit 11A and/or the second electric power converter unit 11B thereof, and/or the electric power converter 21 of the harmonic compensation entity 20, or the first electric power converter unit 21A and/or the second electric power converter unit 21B thereof, may comprise a controller(s) (not shown separately in Figures 1-4) for the power converter, which may be configured to perform any functionalities according to the various embodiments described herein. Similarly, also the possible control entity 30 may be readily configurable by e.g. by means of suitable software or firmware to implement the estimation and/or communication functionalities according to the various embodiments described herein. Also the predetermined static model and/or the simulation of a model of the load entity 10 in question can be stored and/or implemented respective entity performing the functionality. As an example, the example model shown in Figure 9, or any similar model of the load entity 10 in question, could be conveniently simulated in the harmonic compensation entity 20 since the the harmonic compensation entity 20 may readily know the line-to-line voltages (*u_{ab}, u_{bc}*) of the AC grid and it could get the power *p_{L}* flowing to the non-linear load via suitable communication connection, for example.

The data indicative of an operating point of the at least one load entity 10, i.e. the operating point data, and/or estimated harmonic components and/or any other data to be communicated can be communicated by means of any suitable communications equipment. Generally, there may be no high requirements for the communication and any known communication method and/or protocol suitable for this purpose could be used. The communication could be done, e.g., using a field bus, ethernet, or any similar solution, in a wireless and/or wired manner, and/or with other relevant means. The harmonic compensation entity 20 could also communicate information back to the load entity 10 (e.g. to an electric drive). This could enable the load entity 10 to use more input signals in the harmonic estimation (if the estimation is performed in the load entity) to improve estimation result. Possibly useful information that could be shared from the harmonic compensation entity 20 to the one or more load entities 10 could include measured or estimated grid voltage and/or measured or estimated grid impedance, for example. Operating point data, harmonic components, and/or other relevant information for the harmonic compensation could be communicated in various ways such as synchronously, asynchronously, with a pre-defined constant communication interval and/or with a varying communication interval, for instance. If the operating point data or the estimated harmonic components are communicated periodically, e.g., with a time interval of 1 ms to 10 s, such as 1 ms, 10 ms, 100 ms, ... 1 s, or any suitable system-specific time interval, the longer communication interval only means slower response to a changing operating point of the load entity 10. Even a slow response time of harmonic compensation may be considered feasible since harmonic currents may mainly cause extra heat in the AC system and the thermal time constants of the system may be much longer than previously mentioned communication interval examples. Hence, it can be realized that the proposed solution in its basic form is realizable even with a simple communication method, and increasing data exchange frequency or adding more information to the communication between the devices can then increase the harmonic estimation and compensation accuracy and speed.

According to an embodiment, the performing of the at least partial harmonic compensation in the AC network by the harmonic compensation entity 20 on the basis of the estimated at least one harmonic current component comprises providing at least one compensating harmonic current component to the AC network, wherein the at least one compensating harmonic current component is configured to at least partially compensate the estimated at least one harmonic current component. For this purpose, the harmonic compensation entity 20 (e.g., an electric drive with a controllable rectifier 21) may be equipped with a suitable controller (unit, arrangement, system) that can be configured to produce commands to a pulse-width-modulated (PWM) rectifier/inverter semiconductor bridge such that the harmonic compensation entity 20 can inject the desired compensating harmonic current component(s) to the AC grid. As an example, when the positive current direction of the load entity 10 is defined from the AC grid towards the load entity 10 and the positive direction is defined similarly for the harmonic compensation entity 20 (from the AC grid towards the harmonic compensation entity 20), the Kirchoff's current law gives that the compensating harmonic current component for the harmonic component of *Iₙ*∠*θₕ* becomes *Iₕ*∠(*θₕ* + π), i.e., it is in counter phase.

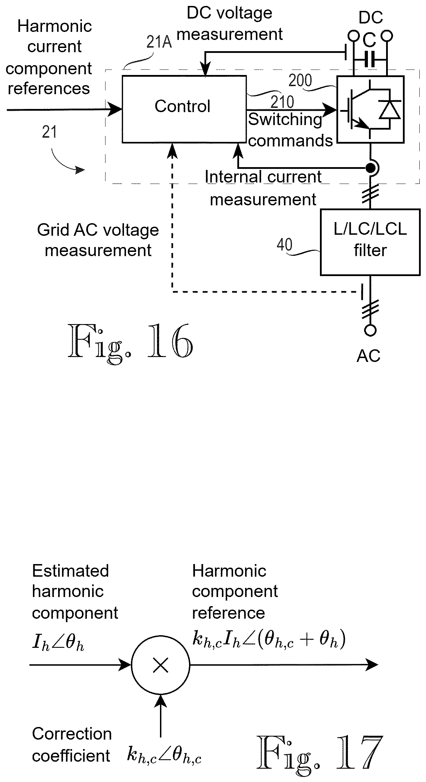

Figure 16 shows a simplified example high-level diagram of an electric power converter 21, such as a rectifier/inverter, 21 comprising one electric power converter unit 21A and equipped with a grid-side L, LC, or LCL filter 40 and DC-side capacitor bank C, and being connected between the DC and AC voltage ports. The possible grid-side filter 40 and/or the DC-side capacitor bank C could be separate element(s) or included in the electric power converter unit 21A or generally in the electric power converter 21, for example. Moreover, there could be more elements and/or components, such as one or more input and/or output filters or switching devices, for example, included the electric power converter unit 21A or generally in the electric power converter 21 or connected thereto. Figure 16 also shows separately a controller 210 of the electric power converter unit 21A, which is capable of (configured to) taking harmonic current component(s) as reference signals and producing switching commands to a PWM rectifier/inverter bridge 200 of the electric power converter unit 21A as an output. The electric power converter 21 may internally measure its own current from the AC side and voltage from the DC side, for example. It may also have internal/external AC (grid) voltage measurement, or it can estimate it. From the measured or estimated grid-voltage, the harmonic compensation entity 20 can extract the phase *θ*_{*g*1} of the fundamental-frequency (first harmonic) grid-voltage component *U*_{*g*1}∠*θ*_{*g*1}, and without loss of generality, the phase *θ*_{*g*1} of this phasor can be set to zero in a coordinate system of the harmonic compensation entity 20.

In the examples shown in Figures 2, 3 and 4, the harmonic compensation entity 20 may be, or comprise, an(other) electric drive equipped with a controllable (e.g. active-front-end, AFE) rectifier. The first electric power converter unit 21A could in these examples correspond to the one shown Figure 16. In this case there may be another (second) electric power converter unit 21B connected to the DC voltage port delivering power to a motor 23 or another load. In case harmonic compensation entity 20 is, or comprises, an electric drive, the compensation could be done in parallel with its normal operation and task to rotate the motor or feed another kind of load. It is preferable to ensure by dimensioning and/or design that both these tasks can be functional simultaneously. Naturally, if the electric drive is not operating at its full power capacity, its controllable rectifier has at least some power and current capacity available for the parallel compensation task. Alternatively, the harmonic compensation entity 20 may be, or comprise, a grid-converter module (such as a PWM inverter bridge) possibly equipped with an AC-side L, LC, or LCL filter and/or a DC-side capacitor bank and essentially correspond to the apparatus depicted in Figure 16. Also in this case, the compensation could be done in parallel with its normal operation to regulate DC voltage and/or to follow active and reactive power commands, for example. It is also possible that the harmonic compensation entity 20 is dedicated for the harmonic current and reactive power compensation. In this case it could be similar to a typical active harmonic filter possibly with the difference of lacking any extra AC current measurements.

To be able to inject compensating harmonic current component(s) with a desired magnitude and phase, for example, the harmonic compensation entity 20 should preferably know how the zero phase *θ*₀ = 0 is defined in the harmonic estimation to handle estimated and compensating harmonic current components in a common reference frame. One possible alternative is to define zero phase *θ*₀ to equal the phase *θ*_{*g*1} of the fundamental (first harmonic) PCC-voltage component in the AC grid as illustrated in Figure 5. Since the harmonic compensation entity 20 can measure or at least estimate the AC grid voltage (as they typically do in any case in their normal operation), they can track the angle of the fundamental voltage component and in this practical example set the phase of the tracked grid-voltage phasor to zero *U*_{*g*1}∠0. It becomes clear that the harmonic compensation entity 20 can then interpret the estimated harmonic current component(s) *Iₙ*∠*θₕ* in a common reference frame to create compensating (counter-phase) harmonic current component(s). This practical selection of the zero phase as *θ*₀ = *θ*_{*g*1} = 0 is only one possible way to ensure that estimated harmonic components can be interpret properly in the compensating device. For a person skilled in the art, it is clear that the zero phase could be also fixed to some other direction (such as *θ*₀ = *θ*_{*g*1} *± π*/*2* or *θ*₀ *= θ*_{*g*1} *± π*) as long as it can be commonly understood both in the estimation process and in the harmonic compensation entity 20, for example. It is considered known *per se,* how to control current or its harmonic components using e.g. a PWM rectifier/inverter in a reference frame tied to fundamental component of the grid voltage (or other reference frames). Any of the suitable known control techniques could be applied in the harmonic compensation entity 20 to achieve the injected compensating harmonic component(s) to match (at least approximately or partially) to the desired (selected) harmonic component(s) such that they are compensated for at least partially. For tracking the grid-voltage angle, a possible approach is to use e.g. a phase-locked loop (PLL), but any other known technique could also be utilized.

Due to the open-loop nature of the proposed harmonic compensation solution, any error in harmonic current estimation may result in an error in the harmonic current compensation. However, the harmonic compensation entity 20 could take (however this is not required) one or more correction coefficients as additional inputs and adjust the reference values of harmonic current components given to the control system in order to fine tune the compensating current components such that resulting harmonic components in the PCC of the AC grid are smaller. The basic principle is depicted in Figure 17. There are several possible ways to input correction coefficient(s) *k_{h,c}*∠θ*_{h,c}* to the harmonic compensation entity 20. Such one or more correction coefficients could be given as user-defined parameters e.g. in commissioning of the system or by any other suitable manner. Alternatively, they could be obtained from another entity, monitoring equipment, and/or control system using a communication bus. Such correction coefficient(s) could also be calculated in the harmonic compensation entity 20 if the information related to the finetuning can be obtained in a different form from the user parameters or communicated by the other devices or entities.

According to an embodiment, the electric system may comprise two or more load entities, wherein the estimating of the at least one harmonic current component caused by the at least one load entity 10 may be performed individually for each of the load entities. The proposed solution can be extended from a system with only one load entity 10 shown in Figures 1, 2 and 4 to a system with two or more load entities 10, shown in the example of Figure 3. In this system or configuration, there are more than one, generally N, load entities 10 and at least one harmonic compensation entity 20. The harmonic estimation, communication and compensation can be done in a similar manner as in the embodiments described earlier. In an alternative, where the harmonic compensation entity 20 estimates the harmonic current components based on operating point data communicated by the load entities 10, it could use multiple estimator groups (cf. Figure 8), e.g., one group for each load entity 10, to get harmonic currents produced by multiple load entities 10 estimated. In the other alternative, where the load entities 10 estimate their own harmonic current components and communicate them to the harmonic compensation entity 20, the multiple estimators could be distributed to (controllers of) the load entities 10. The effective sum of harmonic currents, that would be seen at the PCC without compensation, can be calculated using the Kirchoff's current law as ${I}_{h , sum} = {\sum }_{i}^{N} {I}_{h , i} ∠ {θ}_{h , i}$ where *I_{h,i}*∠*θ_{h,i} (i =* 1, *... N)* are the estimated harmonic components of the individual loads. The harmonic compensation entity 20 can use this law when aggregating harmonic components produced by multiple estimators. In the case of multiple load entities 10, the harmonic compensation entity 20 could compensate for harmonic current sum *I_{h,sum}* within its current and power capabilities, for example. There could also be multiple harmonic compensation entities 20 in or connected to the same AC system.

The feasibility of the proposed compensation method was tested using time-domain simulations and frequency-domain analysis. The simulation case considered below essentially corresponds to the example shown in Figure 2. In the example configuration, there is one 50-kW, three-phase, 6-pulse, diode rectifier equipped with DC chokes and connected to a 400-V, 50-Hz AC grid and supplying varying DC load. The AC grid is modeled to have a configurable supplying transformer with 5 % reactance (in transformer base units) to test different network strengths. Three different supply transformer sizes (1000 kVA, 500 kVA, and 100 kVA) were considered. In parallel with the 6-pulse rectifier, there is a 50-kVA AFE rectifier equipped with an LCL filter that can be loaded and that can inject selected (compensating) harmonic components. The simulation was performed using PLECS circuit simulator and simulation parameters are given in Table I below.

**Table I: Electrical parameters of the simulated system**

| **6-pulse diode rectifier** | | **AFE rectifier** | |
|---|---|---|---|
| **Parameter** | **Value** | **Parameter** | **Value** |
| Nominal power | 50 kW (1 p.u.) | Nominal power | 50 kW (1 p.u.) |
| DC choke total inductance | 458 uH (0.045 p.u.) | LCL filter converter-side inductance | 730 uH (0.072 p.u.) |
| DC capacitance | 1.99 mF (2 p.u.) | LCL filter capacitance | 50 uF (0.05 p.u.) |
| DC Load | 0 ... 60 kW (0 ... 1.2 p.u.) | LCL filter grid-side inductance | 370 uH (0.036 p.u.) |
| | | DC capacitance | 1.5 mF (1.5 p.u.) |
| | | Switching frequency | 10 kHz |

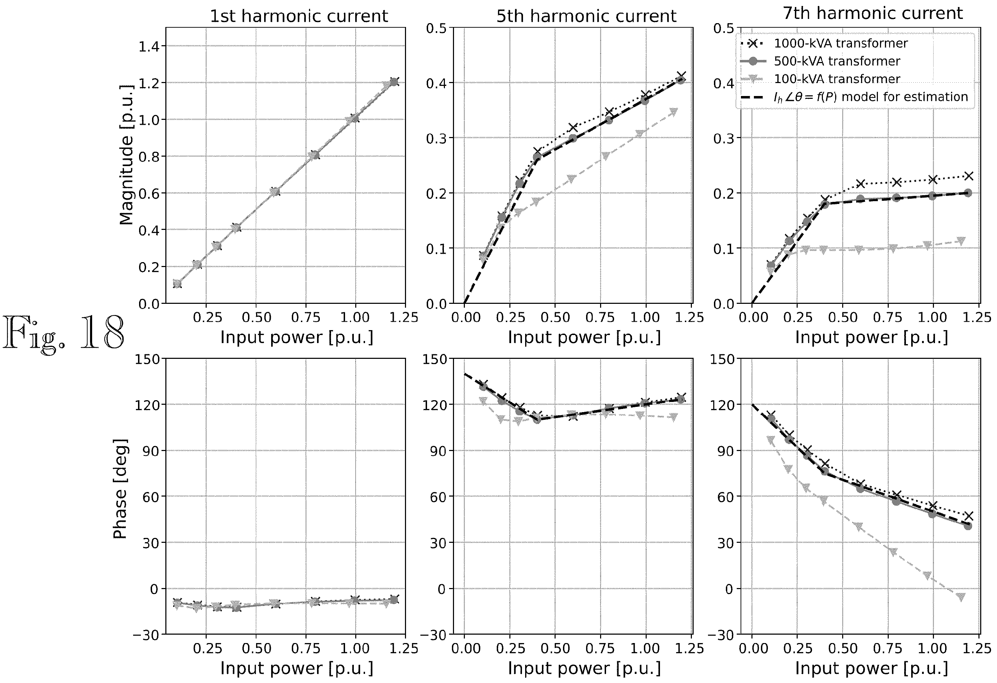

First, Figure 18 shows the 1^{st} (left), 5^{th} (middle), and 7^{th} (right) harmonic AC current component (magnitude and phase) of the example 6-pulse rectifier in the example case of DC load is varied from 0 to 1.2 p.u. and the test case is repeated with different size transformers supplying the rectifier: 1000 kVA transformer, 500 kVA transformer, and 100 kVA transformer. It can be noticed that when the supplying transformer is smaller, then the harmonic component magnitudes are smaller due to the increasing leakage inductance (in absolute value) of the transformer that is effectively in series with the diode rectifier. The example of Figure 18 also shows models *Iₕ*∠θ*ₕ = f*(*P*) for the 5^{th} and 7^{th} harmonic components (h=5, and h=7) in dashed lines. The models *Iₕ*∠θ*ₕ = f*(*P*) are here essentially piece-wise linear functions where the active power is the input, and they try to follow the simulated harmonic components in the case of 500-kVA supplying transformer.

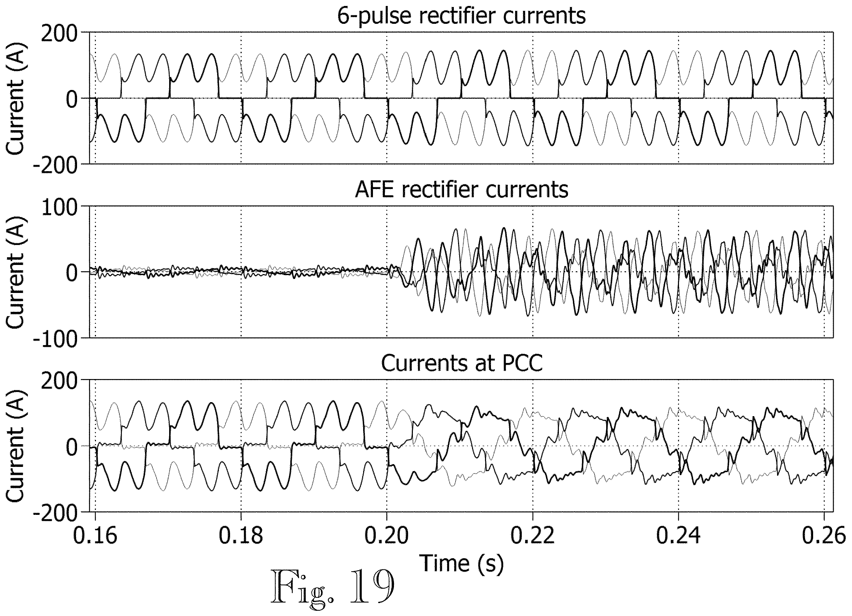

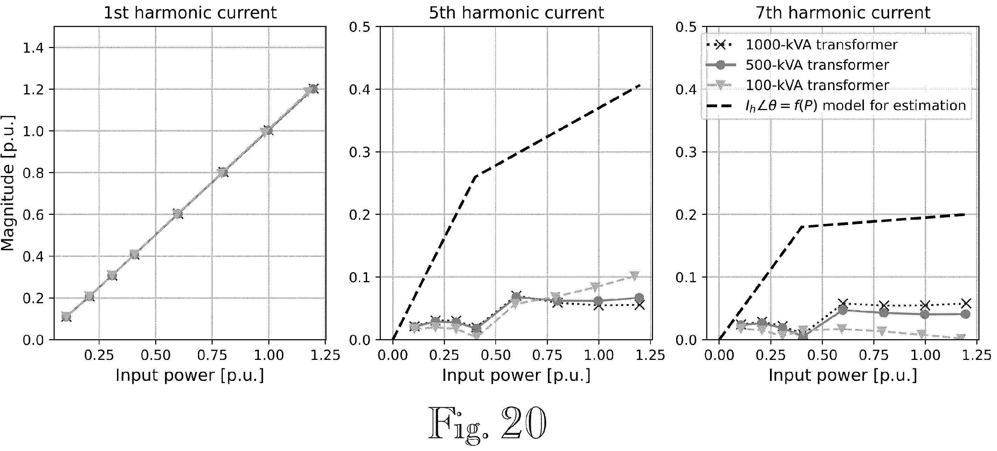

The example models (black dashed lines) shown in Figure 18 are further used to estimate harmonic components in the next step where the AFE rectifier is commanded to inject 5^{th} and 7^{th} compensating harmonic current components based on the estimator output. Figure 19 shows time-domain waveforms of the 6-pulse rectifier AC currents (top), AFE rectifier currents (middle), and currents at the PCC, (bottom) when the 6-pulse rectifier is loaded with the full power (50 kW) and AFE rectifier is starting to inject 5^{th} and 7^{th} compensating harmonic components based on the estimated ones at t = 0.2 s. It can be clearly seen that typical current waveforms of the three-phase diode-rectifier at PCC turns to resemble a bit more sinusoidal waveforms after enabling the open-loop compensation. Figure 20 shows the 5^{th} and 7^{th} current components at the PCC when the open-loop compensation in AFE is turned on. The model *Iₕ*∠*θₕ = f*(*P*) used for harmonic component estimation is marked with the dashed line and it is identical to the line shown in Figure 18. When comparing the 5^{th} and 7^{th} components in Figure 18 (without compensation) and Figure 20 (with compensation), it can be clearly seen that their magnitudes are greatly reduced roughly to one fourth and compensation works in the whole power range. It is also wort noticing that the proposed open-loop compensation can be effective despite the supplying transformer size (1000 kVA, 500 kVA, 100 kVA), i.e. network strength. This can be explained by the impedance-shaping effect of the harmonic compensator at the 5^{th} and 7^{th} harmonic frequencies meaning that supply transformer is in parallel with the harmonic compensator from the 6-pulse rectifier viewpoint. The impedance-shaping effect can also be seen in the 6-pulse rectifier currents in Figure 19, peaks of the pulsed current are higher and valleys are deeper, when the AFE starts injecting the compensating harmonic components.

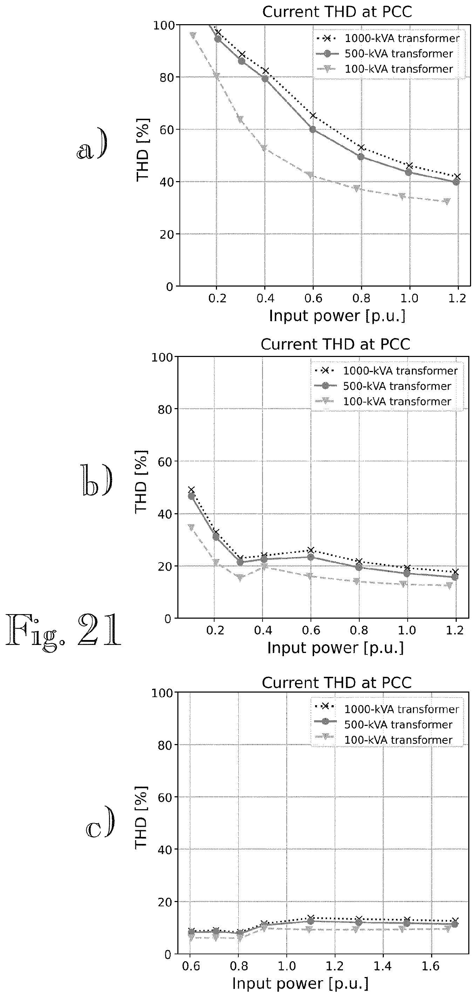

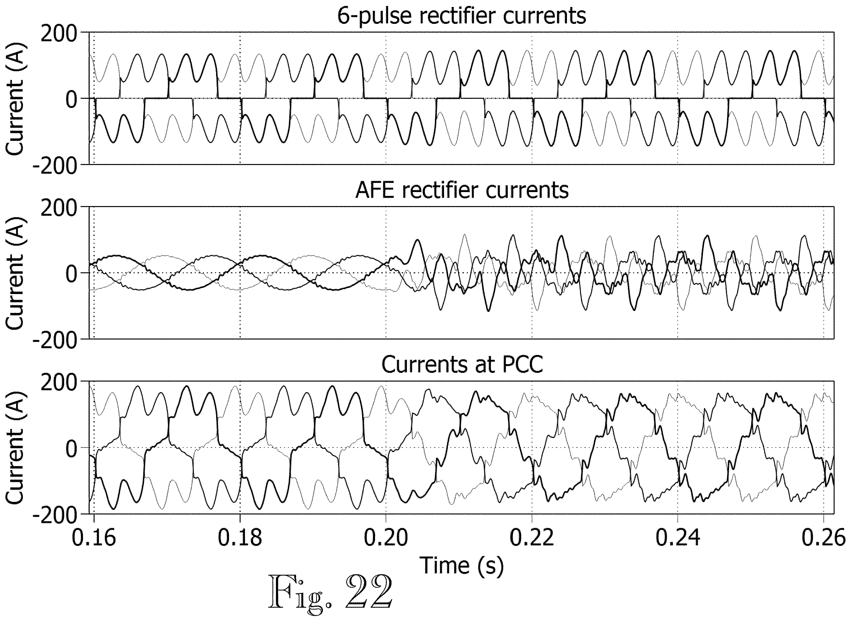

Furthermore, the effect of partial harmonic compensation on the current THD at the PCC is depicted in Figure 21. Without any compensation, i.e. only the 6-pulse rectifier operating, shown in alternative a) in Figure 21, the current THD due to 6-pulse rectifier is around 40 % at the full load and much higher at partial loads. When the open-loop compensation is enabled and AFE is compensating for the 5^{th} and 7^{th} harmonic components of the 6-pulse rectifier, shown in alternative b) in Figure 21, the current THD at the PCC is reduced to half or less (~20 %) at a wide power range. The current THD at the PCC can be further reduced (close to 10 %) if the AFE rectifier is used to supply power to its own load at the same time when compensating for the harmonic components. This is demonstrated in alternative c) in Figure 21. The further reduction in the THD at PCC is due to the increased fundamental-frequency current component drawn by the AFE rectifier. Figure 22 illustrates 6-pulse rectifier AC currents (top), AFE rectifier currents (middle), and currents at the PCC (bottom) when the 6-pulse rectifier is loaded with the full power (50 kW) and AFE rectifier is loaded with 25 kW power and is starting to inject 5^{th} and 7^{th} compensating harmonic components based on the estimated harmonics at t = 0.2 s. Time-domain current waveforms of the 6-pulse rectifier, AFE rectifier, and at the PCC are shown in Figure 22 when the AFE rectifier is first supplying power to its own 25-kW load and after t=0.2 s also starting to inject compensating harmonic components. Now, the PCC current after t=0.2 s has clearly recognizable fundamental component even though some harmonics still exist in the waveform.

According to an embodiment, an arrangement for harmonic compensation in an electric system is provided, wherein the electric system comprises an AC network and at least one load entity 10 comprising at least a first electric power converter 11 connected to the AC network. According to an embodiment, the arrangement comprises estimation means configured to estimate at least one harmonic current component caused in the AC network by the at least one load entity 10 on the basis of at least data indicative of an operating point of the at least one load entity 10, and harmonic compensation entity 20 configured to be connected to the AC network and to perform at least partial harmonic compensation in the AC network on the basis of the estimated at least one harmonic current component caused by the at least one load entity 10.

According to an embodiment, the harmonic compensation entity 20 comprises the estimation means (or is configured to perform the estimation) and is configured to receive the data indicative of the operating point of the at least one load entity 10. The harmonic compensation entity 20 may be configured to receive the data indicative of the operating point of the at least one load entity 10 (directly or indirectly) from the at least one load entity 10 or from some other entity. Moreover, the at least one load entity 10 may be configured to communicate the data indicative of the operating point of the at least one load entity 10 to the harmonic compensation entity 20.

According to another embodiment, the estimation means are located in the at least one load entity 10 (or the load entity is configured to perform the estimation) and configured to communicate the at least one harmonic current component estimated by the estimation means to the harmonic compensation entity.

According to another embodiment, the arrangement further comprises a control entity 30 different from the at least one load entity 10 and different from the harmonic compensation entity 20, wherein the control entity 30 comprises the estimation means, wherein the control entity 30 is configured to receive the data indicative of the operating point of the at least one load entity 10 and configured to communicate the estimated at least one harmonic current component to the harmonic compensation entity 20. The control entity 30 may be configured to receive the data indicative of the operating point of the at least one load entity 10 (directly or indirectly) from the at least one load entity 10. Moreover, the at least one load entity 10 may be configured to communicate the data indicative of the operating point of the at least one load entity 10 to the control entity 30.

According to another embodiment, the arrangement further comprises the control entity 30 different from the at least one load entity 10 and different from the harmonic compensation entity 20 and wherein the control entity 30 comprises the estimation means (or is configured to perform the estimation), wherein the control entity 30 is configured to communicate an operating point command to the at least one load entity 10 and to communicate the estimated at least one harmonic current component to the harmonic compensation entity 20. Moreover, the at least one load entity 10 may be configured to set its operating point according to the operating point command received from the control entity 30.

According to another embodiment, the arrangement further comprises the control entity 30 different from the at least one load entity 10 and different from the harmonic compensation entity 20, wherein the harmonic compensation entity 20 comprises the estimation means (or is configured to perform the estimation), wherein the control entity 30 is configured to communicate an operating point command to the at least one load entity 10 and to communicate the data indicative of the operating point of the at least one load entity 10 to the harmonic compensation entity 20. Moreover, the at least one load entity 10 may be configured to set its operating point according to the operating point command received from the control entity 30.

According to another embodiment, the harmonic compensation entity 20 is configured to the perform the at least partial harmonic compensation in the AC network on the basis of the estimated at least one harmonic current component by providing at least one compensating harmonic current component to the AC network, wherein the at least one compensating harmonic current component is configured to at least partially compensate the estimated at least one harmonic current component.

According to an embodiment, an electric system is provided which system comprises an AC network, at least one load entity 10 comprising a first electric power converter 11 connected to the AC network, and an arrangement according to any of the embodiments described herein, wherein the harmonic compensation entity 20 is connected to the AC network. According to an embodiment, an electric power converter is provided, which electric power converter is configured to be connected to the AC network and to estimate the at least one harmonic current component caused in the AC network by the at least one load entity 10 connected to the AC network on the basis of at least the data indicative of the operating point of the at least one load entity 10.

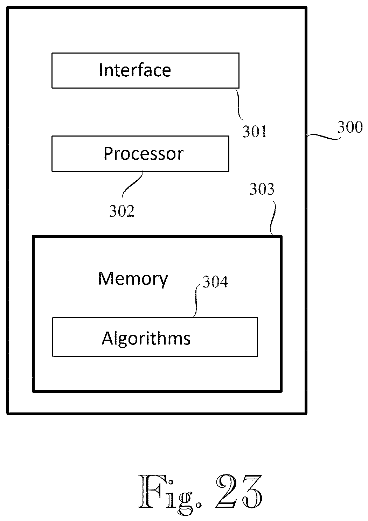

A controller (control arrangement, unit, system) of any one of the entities described herein, and/or any other means for implementing at least part of the functionality according to any one of the embodiments herein may be implemented as one physical unit or as two or more separate physical units that are configured to implement the functionality or functionalities. Herein the term 'unit' generally refers to a physical or logical entity, such as a physical device or a part thereof or a software routine. Figure 23 is a simplified block diagram illustrating some units for an apparatus (device, equipment, system) 300 configured to perform at least some functionality of the controller, or generally any corresponding apparatus. **In** the illustrated example, the apparatus 300 comprises one or more interface (IF) entities 301, such as one or more user interfaces and/or data interfaces, and one or more processing entities 302 connected to various interface entities 301 and to one or more memories 303. The one or more interface entities 301 may be entities for receiving and/or transmitting information, such as communication interfaces comprising hardware and/or software for realising communication connectivity according to one or more communication protocols, or for realising data, e.g. measuring or operational data, storing and fetching, and/or for providing user interaction via one or more user interfaces. A processing entity 302 is capable to perform calculations and configured to implement at least part of functionalities and/or operations described above, with corresponding algorithms 304 stored in the memory 303. The processing entity 302 may include one or more processors, controllers, control units, micro-controllers, etc. configurable to carry out e.g. embodiments, examples, implementations and/or operations described above. Generally, a processor may be a central processing unit, but the processor entity 302 may be an additional operation processor or a multicore processor or a microprocessor, for instance. A memory 303 may be usable for storing a computer program code required for one or more functionalities/operations described above, that is, the algorithms 304 for implementing the functionality/operations described above. The memory 303 may also be usable for storing, at least temporarily, other possible information required for one or more functionalities/operations described above. The memory 303 may comprise a data buffer that may, at least temporarily, store for example measurement and/or operational data and/or information received as a user input and/or from another entity. An apparatus comprising the means for providing any embodiment described herein may be implemented at least partly by means of such apparatus 300 as exemplified in Figure 23.

Generally, such a controller 300, and/or any other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

The various embodiments described herein can be implemented at least partly in existing system elements, such as various electric power converter device(s) or similar device(s), and/or by using separate dedicated elements or devices in a centralized or distributed manner. Such existing devices may comprise processors and memory that may be utilized in the functions according to the various embodiments described herein. Generally, many electric devices, such as electric power systems, and components thereof, such as intelligent electronic devices, may comprise processors and memory that may also be utilized in implementing at least part of the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the control arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 23 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

## Claims

1. A method for harmonic compensation in an electric system, the electric system comprising an AC network, at least one load entity comprising at least a first electric power converter connected to the AC network, and a harmonic compensation entity connected to the AC network and, the method comprising:
estimating at least one harmonic current component caused by the at least one load entity in the AC network on the basis of at least data indicative of an operating point of the at least one load entity; and
performing at least partial harmonic compensation in the AC network by the harmonic compensation entity on the basis of the estimated at least one harmonic current component caused by the at least one load entity.

2. A method as claimed in claim 1, wherein the data indicative of the operating point of the at least one load entity comprises one or more of the following: an operating power of the first electric power converter, a DC link voltage of the first electric power converter and/or a DC link current of the first electric power converter, and/or wherein the data indicative of the operating point of the at least one load entity comprises one or more quantities indicative of the operating power of the first electric power converter and/or of the DC link voltage of the first electric power converter and/or of the DC link current of the first electric power converter.

3. A method as claimed in claim 1 or 2, wherein the estimating of the at least one harmonic current component caused by the at least one load entity is performed additionally on the basis of characteristic data of the AC network.

4. A method as claimed in claim 3, wherein the characteristic data of the AC network comprises one or more of the following: a voltage of the AC network, an impedance of the AC network, a short circuit current of the AC network and/or a short circuit power of the AC network.

5. A method as claimed in any one of claims 1 to 4, wherein the estimating of the at least one harmonic current component caused by the at least one load entity is performed by using a predetermined static model or by simulation of a model of the load entity.

6. A method as claimed in any one of claims 1 to 5, wherein the electric system comprises two or more load entities, wherein the estimating of the at least one harmonic current component caused by the at least one load entity is performed individually for each of the load entities.

7. A method as claimed in any one of claims 1 to 6, wherein the estimating of the at least one harmonic current component caused by the at least one load entity is performed in the harmonic compensation entity, wherein the method comprises communicating the data indicative of the operating point of the at least one load entity from the at least one load entity to the harmonic compensation entity.

8. A method as claimed in any one of claims 1 to 6, wherein the estimating of the at least one harmonic current component caused by the at least one load entity is performed in the same at least one load entity, wherein the method comprises communicating the estimated at least one harmonic current component from the at least one load entity to the harmonic compensation entity.

9. A method as claimed in any one of claims 1 to 6, wherein the estimating of the at least one harmonic current component caused by the at least one load entity is performed in a control entity different from the at least one load entity and different from the harmonic compensation entity, wherein the method comprises communicating the data indicative of the operating point of the at least one load entity from the at least one load entity to the control entity and communicating the estimated at least one harmonic current component from the control entity to the harmonic compensation entity.

10. A method as claimed in any one of claims 1 to 6, wherein the estimating of the at least one harmonic current component caused by the at least one load entity is performed in a control entity different from the at least one load entity and different from the harmonic compensation entity, wherein the method comprises communicating an operating point command from the control entity to the at least one load entity and communicating the estimated at least one harmonic current component from the control entity to the harmonic compensation entity.

11. A method as claimed in any one of claims 1 to 6, wherein the estimating of the at least one harmonic current component caused by the at least one load entity is performed in the harmonic compensation entity, wherein the method comprises communicating an operating point command from a control entity different from the at least one load entity and different from the harmonic compensation entity to the at least one load entity and communicating the data indicative of the operating point of the at least one load entity from the control entity to the harmonic compensation entity.

12. A method as claimed in any one of claims 1 to 11, wherein the performing of the at least partial harmonic compensation in the AC network by the harmonic compensation entity on the basis of the estimated at least one harmonic current component comprises providing at least one compensating harmonic current component to the AC network, wherein the at least one compensating harmonic current component is configured to at least partially compensate the estimated at least one harmonic current component.

13. A method as claimed in any one of claims 1 to 12, wherein the harmonic compensation entity comprises a second electric power converter connected to the AC network.

14. An arrangement for harmonic compensation in an electric system, the electric system comprising an AC network and at least one load entity comprising at least a first electric power converter connected to the AC network, the arrangement comprising:
estimation means configured to estimate at least one harmonic current component caused in the AC network by the at least one load entity on the basis of at least data indicative of an operating point of the at least one load entity; and
harmonic compensation entity configured to be connected to the AC network and to perform at least partial harmonic compensation in the AC network on the basis of the estimated at least one harmonic current component caused by the at least one load entity.

15. An arrangement according to claim 14, wherein the harmonic compensation entity comprises the estimation means and is configured to receive the data indicative of the operating point of the at least one load entity.

16. An arrangement according to claim 14, wherein the estimation means are located in the at least one load entity and configured to communicate the at least one harmonic current component estimated by the estimation means to the harmonic compensation entity.

17. An arrangement according to claim 14, wherein the arrangement further comprises a control entity different from the at least one load entity and different from the harmonic compensation entity, wherein the control entity comprises the estimation means and wherein the control entity is configured to receive the data indicative of the operating point of the at least one load entity and configured to communicate the estimated at least one harmonic current component to the harmonic compensation entity.

18. An arrangement according to claim 14, wherein the arrangement further comprises a control entity different from the at least one load entity and different from the harmonic compensation entity, wherein the control entity comprises the estimation means and wherein the control entity is configured to communicate an operating point command to the at least one load entity and to communicate the estimated at least one harmonic current component to the harmonic compensation entity.

19. An arrangement according to claim 14, wherein the arrangement further comprises a control entity different from the at least one load entity and different from the harmonic compensation entity and wherein the harmonic compensation entity comprises the estimation means, wherein the control entity is configured to communicate an operating point command to the at least one load entity and to communicate the data indicative of the operating point of the at least one load entity to the harmonic compensation entity.

20. An arrangement as claimed in any one of claims 14 to 19, wherein the harmonic compensation entity is configured to the perform the at least partial harmonic compensation in the AC network on the basis of the estimated at least one harmonic current component by providing at least one compensating harmonic current component to the AC network, wherein the at least one compensating harmonic current component is configured to at least partially compensate the estimated at least one harmonic current component.

21. An arrangement as claimed in any one of claims 14 to 20, wherein the harmonic compensation entity comprises a second electric power converter configured to be connected to the AC network.

22. An electric system, comprising:
an AC network;
at least one load entity comprising a first electric power converter connected to the AC network; and
an arrangement as claimed in any one of claims 14 to 21, wherein the harmonic compensation entity is connected to the AC network.

23. An electric power converter, the electric power converter being configured to be connected to an AC network and to estimate at least one harmonic current component caused in the AC network by at least one load entity connected to the AC network on the basis of at least data indicative of an operating point of the at least one load entity.
